# NEUE EUROPÄISCHE PATENTSCHRIFT

(11) **EP 1 427 086 B2**
(45) Veröffentlichungstag und Bekanntmachung des Hinweises auf die Entscheidung über den Einspruch: **24.07.2013**
(45) Hinweis auf die Patenterteilung: 01.08.2007
(21) Anmeldenummer: 03024155.8
(22) Anmeldetag: 20.10.2003
(51) Int. Cl.: H02J 13/00, H02J 1/06, G05B 19/042

(54) **Elektrisches Gerät und Verfahren zum Betreiben eines elektrischen Geräts**
Electrical apparatus and method for operating it
Appareil électrique et methode pour le faire fonctionner

(30) Priorität: 03.12.2002 DE 10256623
(43) Veröffentlichungstag der Anmeldung: 09.06.2004
(73) Patentinhaber: KROHNE MESSTECHNIK GMBH & CO. KG, 47058 Duisburg (DE)
(72) Erfinder: Brockhaus, Helmut, Dr., 46535 Dinslaken (DE)
(74) Vertreter: Gesthuysen Patent- und Rechtsanwälte

(56) Entgegenhaltungen:
- EP-A1- 1 091 332
- WO-A-00/75904
- WO-A-01/13621
- DE-C- 4 333 702
- DE-U1- 29 917 651
- 'VEREINHEITLICHUNG DES SIGNALPEGELS FÜR DIE AUSFALLINFORMATION VON DIGITALEN MESSUMFORMEN MIT ANALOGEN AUSGANGSSIGNAL' ENDRESS + HAUSER, PEOPLE FOR PROCESS AUTOMATION-18.01.94 Seiten 1 - 20

## Beschreibung

Die Erfindung betrifft ein elektrisches Gerät mit einer Zweileiterschnittstelle, wobei die Zweileiterschnittstelle einerseits der elektrischen Stromversorgung des elektrischen Geräts und andererseits der Übertragung eines Signals dient, wobei im normalen Betrieb die über die Zweileiterschnittstelle erfolgende maximale Stromaufnahme des elektrischen Geräts auf einen vorbestimmten oberen Grenzwert beschränkt ist und wobei die Zweileiterschnittstelle ein analoger Stromanschluß mit einem normalen Strombereich von 4 bis 20 mA ist. Ein solches Gerät ist durch offenkundige Vorbenutzung bekannt. Die Erfindung betrifft ferner ein Verfahren zum Betreiben eines solchen elektrischen Geräts.

Elektrische Geräte der eingangs beschriebenen Art mit einer Zweileiterschnittstelle, wie beschrieben im Dokument, WO 0075904, werden auch als Zweileitergeräte bezeichnet. Häufig handelt es sich bei diesen Zweileitergeräten um Meßgeräte. Während des normalen Betriebs, also z. B. während eines normalen Meßbetriebs, nehmen diese Zweileitergeräte üblicherweise einen vorbestimmten Strom auf. Bei Zweileitergeräten mit analogem Stromanschluß liegt dieser vorbestimmte Strom typischerweise im Bereich von 4 bis 20 mA, wobei im Falle eines Meßgeräts 4 mA den kleinsten und 20 mA den größten Meßwert signalisiert. Teilweise wir dieser Bereich erweitert, z.B. auf einen Bereich von 3,8 bis 20,5 mA, um z.B. beim Justieren einen Meßbereichsüberlauf sicher erkennen zu können oder zur Übertragbarkeit der Dynamik eines Meßsignals. Werte außerhalb dieses Bereichs werden nicht als Meßwerte interpretiert. Vielmehr ist häufig vorgesehen, daß ein Wert über dem oberen Grenzwert, z.B. ein Wert von 22 mA, als ein Hinweis auf einen Fehlerzustand interpretiert wird.

Zweileitergeräte, bei denen die Zweileiterschnittstelle von einem digitalem Busanschluß gebildet wird, wobei die Speisung des Zweileitergeräts ebenfalls aus diesem Bus erfolgt (z. B. IEC 61158-2), weisen im allgemeinen eine konstante Stromaufnahme von ca. 10 mA auf. Sowohl im Falle einer Zweileiterschnittstelle in Form eines analogen Stromanschlusses als auch im Falle einer Zweileiterschnittstelle in Form eines digitalen Busanschlusses mit Speisung des Zweileitergeräts über diesen Busanschluß erfolgt die Stromversorgung des elektrischen Geräts über ein externes Speisegerät.

Neben dem normalen Betrieb des elektrischen Geräts, also z. B. dem Einsatz des elektrischen Geräts im Meßbetrieb, sind von Zeit zu Zeit Sonderbetriebsfunktionen des elektrischen Geräts erforderlich. Eine solche Sonderbetriebsfunktion stellt z. B. ein Software-Update dar, also ein Herunterladen, Aufspielen oder/und Programmieren einer neuen Software für das elektrische Gerät. Als Sonderbetriebfunktionen kommen jedoch auch Kalibrier-, Diagnose- und Wartungsfunktionen in Betracht.

Das Versetzen des elektrischen Geräts in eine solche Sonderbetriebsfunktion ist insofern problematisch, als daß bei elektrischen Geräten mit einem analogen Stromanschluß als Zweileiterschnittstelle im allgemeinen der normale Betrieb, also z. B. der Meßbetrieb, während der Sonderbetriebsfunktion nicht weitergeführt werden kann. Auch bei elektrischen Geräten mit einer Zweileiterschnittstelle in Form eines digitalen Busanschlusses mit Speisung des elektrischen Geräts über denselben kann es zu Konflikten mit normalen Betriebsfunktionen, zumindest jedoch zu einer eingeschränkten Funktionsfähigkeit des elektrischen Geräts kommen.

Dementsprechend ist es die Aufgabe der Erfindung, die zuvor beschriebene Problematik zu verringern, die mit den in Rede stehenden Sonderbetriebsfunktionen der elektrischen Geräte mit Zweileiterschnittstelle verbunden ist.

Ausgehend von dem eingangs beschriebenen elektrischen Gerät mit einer Zweileiterschnittstelle ist die zuvor hergeleitete und aufgezeigte Aufgabe dadurch gelöst, daß die zulässige Stromaufnahme des elektrischen Geräts automatisch temporär über den vorbestimmten oberen Grenzwert hinaus erhöht ist, wenn das elektrische Gerät in eine Sonderbetriebsfunktion versetzt ist, die maximal zulässige Stromaufnahme nämlich auf 22 mA erhöht ist oder auf einen solchen Wert erhöht ist, der dem FDE-Wert des Meßgeräts entspricht.

Erfindungsgemäß ist also vorgesehen, daß dem elektrischen Gerät während der Sonderbetriebsfunktion mehr Leistung zur Verfügung steht, so daß die während der Sonderbetriebsfunktion zu erfolgenden Abläufe, wie ein Software-Update oder eine Neukalibrierung des elektrischen Geräts, schneller abgeschlossen werden können. Die Dauer der Sonderbetriebsfunktion kann erfindungsgemäß also verringert werden. Nach Beendigung der Sonderbetriebsfunktion kehrt die Stromaufnahme wieder in den für den normalen Betrieb vorgesehenen Bereich zurück, in dem die maximale Stromaufnahme des elektrischen Geräts auf einen vorbestimmten oberen Grenzwert beschränkt ist. Erfindungsgemäß ist es im übrigen auch möglich, die zusätzlich zur Verfügung stehende Leistung während der Sonderbetriebsfunktion nicht für die Verkürzung der für die Sonderbetriebsfunktion erforderliche Zeit zu nutzen, sondern dafür, während der Sonderbetriebsfunktion mit solchen Abläufen zu arbeiten, die mehr Strom erfordern, also erst durch den zusätzlich zur Verfügung stehenden Strom möglich werden.

Wie weiter oben schon erläutert, wird ein Wert über dem oberen Grenzwert, also z.B. ein Wert von 22mA, bei Zweileitergeräten mit einem analogen Stromanschluß häufig dafür verwendet, einen Fehlerzustand zu kennzeichnen und kann daher grundsätzlich vom Speisegerät geliefert werden. Vorliegend erfolgt bei dem über den oberen Grenzwert erhöhten Wert, also z.B. einem Strom von 22 mA, jedoch gerade keine Interpretation dieses Wertes als Hinweis auf einen Fehlerzustand: Eine solche Interpretation erfolgt nur im normalen Betrieb, nicht jedoch in der Sonderbetriebsfunktion.

Bei einem elektrischen Gerät, bei dem die Zweileiterschnittstelle von einem digitalen Busanschluß gebildet wird, ist gemäß einer bevorzugten Weiterbildung der Erfindung vorgesehen, daß in der Sonderbetriebsfunktion des elektrischen Geräts die maximal zulässige Stromaufnahme auf einen solchen Wert erhöht ist, der dem FDE-Wert der Buselektronik entspricht. Als FDE (Fault Disconnection Electronic) wird eine Einrichtung beschrieben, die häufig bei für digitale Bussysteme, wie den Profibus-PA (IEC 6158-2), geeigneten Geräten vorgesehen ist: Um insbesondere in einem Kurzschlußfall zu vermeiden, daß durch ein defektes, mit dem Bus verbundenes Gerät auch die anderen mit dem Bus verbundenen Geräte funktionslos werden, wird durch die in dem jeweiligen Busgerät vorgesehene FDE die maximale Stromaufnahme des jeweiligen Busgeräts begrenzt, und zwar auf den FDE-Wert. Um nun möglichst viel Leistung während der Sonderbetriebsfunktion zur Verfügung zu haben, wird ein solcher Wert für die maximal zulässige Stromaufnahme gewählt, der dem FDE-Wert entspricht. Eine solche Erhöhung der maximal zulässigen Stromaufnahme wird im allgemeinen immer möglich sein, da auch das Speisegerät des entsprechenden Bussegments eine derartige Stromerhöhung normalerweise immer tolerieren wird. Diesbezüglich sei angemerkt, daß die Grundidee der Erfindung grundsätzlich auch durch sein solche Erhöhung der maximal zulässigen Stromaufnahme realisierbar ist, die unterhalb des FDE-Wertes liegt. Liegt der normale Stromwert z.B. bei 10 mA, und beträgt der FDE-Wert 15 mA, so wird der Grundgedanke der Erfindung schon durch eine Erhöhung der maximal zulässigen Stromaufnahme auf 14 mA realisiert. Durch eine Erhöhung bis zum FDE-Wert von 15 mA steht jedoch noch mehr Leistung zur Verfügung.

Grundsätzlich kann auch ein elektrisches Gerät mit einer Zweileiterschnittstelle in Form eines digitalen Busanschlusses während der Sonderbetriebsfunktion seinen normalen Betrieb einstellen. Bei einem Meßgerät mit digitaler Busschnittstelle kann also vorgesehen sein, daß während der Sonderbetriebsfunktion keine Meßfunktion durchgeführt wird. Gemäß einer bevorzugten Weiterbildung der Erfindung ist bei einem elektrischen Gerät mit einer Zweileiterschnittstelle in Form eines digitalen Busanschlusses jedoch vorgesehen, daß auch während der Sonderbetriebsfunktion des elektrischen Geräts der digitale Busanschluß der Übertragung des Signals dient. Grundsätzlich wird dies nämlich ohne weiteres möglich sein, erfolgt doch die digitale Kommunikation lediglich durch Modulation des den Speisestrom bereitstellenden Trägersignals.

Ausgehend von dem eingangs beschriebenen Verfahren zum Betreiben eines elektrischen Geräts ist die weiter oben hergeleitete und aufgezeigte Aufgabe dadurch gelöst, daß beim Versetzen des elektrischen Geräts in eine Sonderbetriebsfunktion die zulässige Stromaufnahme des elektrischen Geräts automatisch temporär über den vorbestimmten oberen Grenzwert hinaus erhöht wird.

Bevorzugte Weiterbildungen des erfindungsgemäßen Verfahrens zum Betreiben eines elektrischen Geräts ergeben sich in Analogie zu den zuvor beschriebenen bevorzugten Weiterbildungen des elektrischen Geräts selbst.

Im einzelnen gibt es nun eine Vielzahl von Möglichkeiten, das erfindungsgemäße elektrische Gerät sowie das erfindungsgemäße Verfahren zum Betreiben eines solchen elektrischen Geräts auszugestalten. Dazu wird einerseits auf die den unabhängigen Patentansprüchen nachgeordneten Patentansprüche sowie auf die nachfolgende Beschreibung bevorzugter Ausführungsbeispiele der Erfindung unter Bezugnahme auf die Zeichnung verwiesen. In der Zeichnung zeigt
- Fig. 1: schematisch die Erhöhung der zulässigen Stromaufnahme des elektrischen Geräts während einer Sonderbetriebsfunktion gemäß einem ersten bevorzugten Ausführungsbeispiel der Erfindung und
- Fig. 2: schematisch die Erhöhung der zulässigen Stromaufnahme eines elektrischen Geräts während einer Sonderbetriebsfunktion gemäß einem zweiten bevorzugten Ausführungsbeispiel der Erfindung.

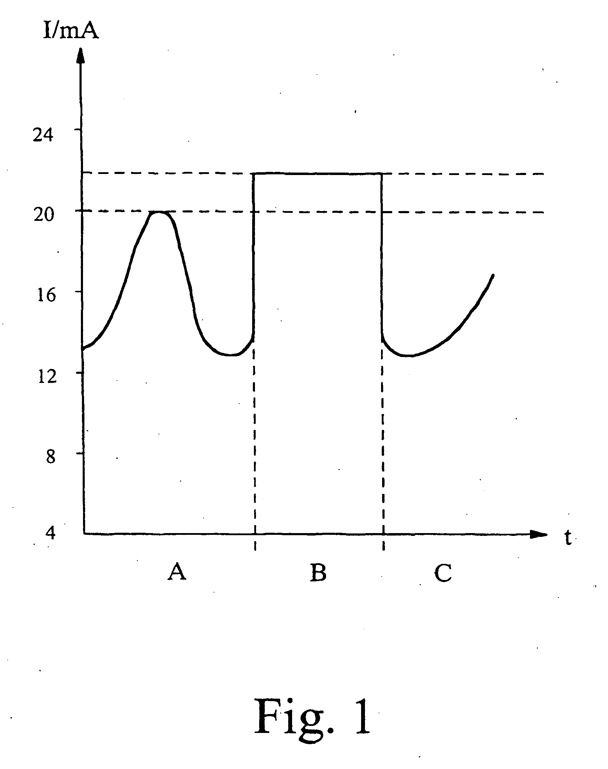

Bei dem ersten bevorzugten Ausführungsbeispiel der Erfindung handelte es sich um ein als Zweileitergerät ausgestaltetes elektrisches Meßgerät mit analogem Stromanschluß, über den im normalen Meßbetrieb ein Strom zwischen 4 und 20 mA fließt. Dieser Strom dient einerseits der Speisung des elektrischen Meßgeräts gemäß dem ersten bevorzugten Ausführungsbeispiel der Erfindung und stellt andererseits den Meßwert dar. Ein normaler Meßbetrieb des Meßgeräts gemäß dem ersten bevorzugten Ausführungsbeispiel der Erfindung liegt nun bei der aus Fig. 1 ersichtlichen Darstellung im Zeitbereich A vor. Dort verändert sich der Strom in Abhängigkeit von der Zeit, wobei der Stromwert grundsätzlich zwischen 4 und 20 mA schwanken kann, um den kleinstmöglichen, den größtmöglichen oder einen dazwischenliegenden Meßwert darzustellen.

Beim Übergang von dem Zeitbereich A in den Zeitbereich B wird nun eine Sonderbetriebsfunktion, nämlich ein Software-Update des Meßgeräts, veranlaßt. Dabei wird die maximal zulässige Stromaufnahme des Meßgeräts gemäß dem ersten bevorzugten Ausführungsbeispiel der Erfindung automatisch über den bisherigen oberen Grenzwert von 20 mA auf einen Stromwert von 22 mA erhöht. Damit steht dem Meßgerät gemäß dem ersten bevorzugten Ausführungsbeispiel der Erfindung während des Software-Updates mehr Leistung zur Verfügung, so daß das Software-Update schnell abgeschlossen werden kann. Die Erhöhung der maximal zulässigen Stromaufnahme während des Software-Updates ist temporär, bei Übergang vom Zeitbereich B in den Zeitbereich C, der der Beendigung des Software-Updates entspricht, gilt wieder der vorbestimmte obere Grenzwert des Strombereichs von 20 mA für den normalen Meßbetrieb.

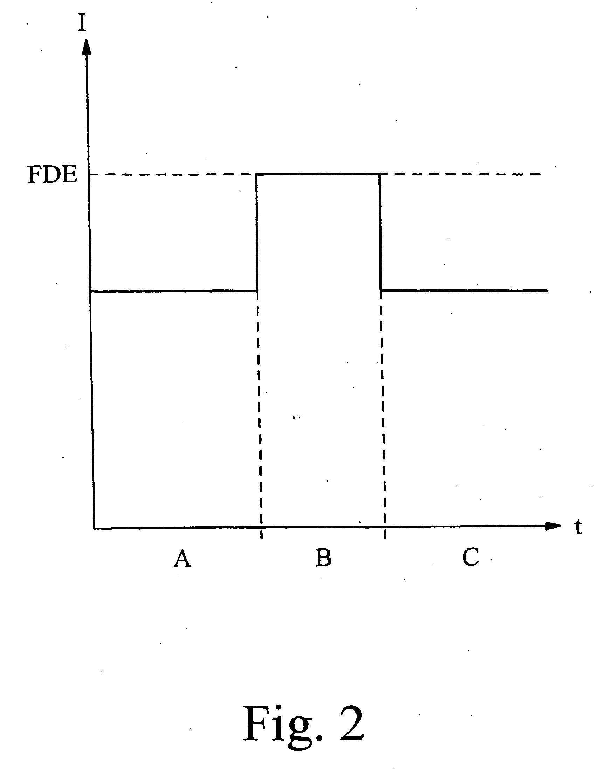

Aus Fig. 2 ist nun schematisch der Betrieb eines solchen Meßgeräts ersichtlich, das eine Zweileiterschnittstelle in Form einer digitalen Busschnittstelle aufweist. Im normalen Meßbetrieb, der z. B. im aus Fig. 2 ersichtlichen Zeitbereich A vorliegt, wird das Meßgerät gemäß dem zweiten bevorzugten Ausführungsbeispiel der Erfindung mit einem im Mittel konstanten Strom gespeist. Zur Übertragung von digitalen Funktionen kann dieses Stromsignal moduliert sein, was in Fig. 2 nicht weiter dargestellt ist.

Sobald das Meßgerät gemäß dem zweiten bevorzugten Ausführungsbeispiel der Erfindung in eine Sonderbetriebsfunktion, vorliegend in eine Kalibrierfunktion, versetzt wird, in Fig. 2 durch den Übergang des Zeitbereich A in den Zeitbereich B gekennzeichnet, wird die maximal zulässige Stromaufnahme erhöht, nämlich auf einen solchen Wert, der dem FDE-Wert des Meßgeräts entspricht. Damit wird eine maximale Leistungserhöhung erreicht.

Darüber hinaus kann auch der Meßbetrieb weitergeführt werden, da auch das erhöhte Stromsignal zur Übertragung von digitalen Informationen weiterhin moduliert werden kann. Ähnlich wie bei dem zuvor beschriebenen ersten bevorzugten Ausführungsbeispiel der Erfindung kehrt die maximal zulässige Stromaufnahme bei Beendigung der Sonderbetriebsfunktion "Kalibrieren", also bei dem aus Fig. 2 ersichtlichen Übergang des Zeitbereichs B in den Zeitbereich C, auf den Wert für den Normalbetrieb zurück.

Zu der vorliegenden Erfindung sei abschließend noch folgendes festgehalten:

Die Erfindung betrifft elektrische Geräte mit wenigstens einer Zweileiterschnittstelle. Damit ist die Erfindung jedoch auch auf solche elektrischen Geräte anwendbar, die mehrere Zweileiterschnittstellen im hier in Rede stehenden Sinn oder zumindest neben einer solchen Zweileiterschnittstelle wenigstens eine weitere, gegebenenfalls andere Schnittstelle aufweisen.

Wenn es vorliegend heißt, daß die zulässige Stromaufnahme des elektrischen Geräts über den vorbestimmten oberen Grenzwert für den normalen Betrieb des elektrischen Geräts erhöht wird, so ist mit "zulässig" nicht gemeint, daß das elektrische Gerät ansonsten zwangsläufig nicht mehr funktionsfähig wäre. Vielmehr beschreibt die Bezeichnung "zulässig" das, was im Normalbetrieb, gegebenenfalls durch eine Norm, vorgegeben ist.

## Patentansprüche

1. Elektrisches Gerät mit einer Zweileiterschnittstelle, wobei die Zweileiterschnittstelle einerseits der elektrischen Stromversorgung des elektrischen Geräts und andererseits der Übertragung eines Signals dient, wobei im normalen Betrieb die über die Zweileiterschnittstelle erfolgende maximale Stromaufnahme des elektrischen Geräts auf einen vorbestimmten oberen Grenzwert beschränkt ist und wobei die Zweileiterschnittstelle ein analoger Stromanschluss mit einem normalen Strombereich von 4 bis 20 mA ist, **dadurch gekennzeichnet, dass** die zulässige Stromaufnahme des elektrischen Geräts automatisch temporär über den vorbestimmten oberen Grenzwert hinaus erhöht ist, wenn das elektrische Gerät in eine Sonderbetriebsfunktion versetzt ist, die maximal zulässige Stromaufnahme nämlich auf 22 mA erhöht ist.

2. Elektrisches Gerät mit einer Zweileiterschnittstelle, wobei die Zweileiterschnittstelle einerseits der elektrischen Stromversorgung des elektrischen Geräts und andererseits der Übertragung eines Signals dient, wobei im normalen Betrieb die über die Zweileiterschnittstelle erfolgende maximale Stromaufnahme des elektrischen Geräts auf einen vorbestimmten oberen Grenzwert beschränkt ist und wobei die Zweileiterschnittstelle ein digitaler Busanschluss ist, **dadurch gekennzeichnet, dass** die zulässige Stromaufnahme des elektrischen Geräts automatisch temporär über den vorbestimmten oberen Grenzwert hinaus erhöht ist, wenn das elektrische Gerät in eine Sonderbetriebsfunktion versetzt ist, nämlich die maximal zulässige Stromaufnahme auf einen solchen Wert erhöht ist, der dem FDE-Wert des Messgeräts entspricht.

3. Elektrisches Gerät nach Anspruch 2, **dadurch gekennzeichnet, dass** der digitale Busanschluss auch während der Sonderbetriebsfunktion des elektrischen Geräts der Übertragung des Signals dient.

4. Elektrisches Gerät nach einem der Ansprüche 1 bis 3, **dadurch gekennzeichnet, dass** als Sonderbetriebsfunktion ein Software-Update oder/und eine Kalibrierfunktion oder/und eine Diagnosefunktion oder/und eine Wartungsfunktion angesehen wird.

5. Verfahren zum Betreiben eines elektrischen Geräts, das eine Zweileiterschnittstelle aufweist, wobei über die Zweileiterschnittstelle einerseits die elektrische Stromversorgung des elektrischen Geräts erfolgt und andererseits ein Signal übertragen wird, wobei im normalen Betrieb die über die Zweileiterschnittstelle erfolgende maximale Stromaufnahme des elektrischen Geräts auf einen vorbestimmten oberen Grenzwert beschränkt wird und wobei die Zweileiterschnittstelle ein analoger Stromanschluss mit einem normalen Strombereich von 4 bis 20 mA ist, **dadurch gekennzeichnet, dass** beim Versetzen des elektrischen Geräts in eine Sonderbetriebsfunktion die maximal zulässige Stromaufnahme des elektrischen Geräts automatisch temporär auf 22 mA erhöht wird.

6. Verfahren zum Betreiben eines elektrischen Geräts, das eine Zweileiterschnittstelle aufweist, wobei über die Zweileiterschnittstelle einerseits die elektrische Stromversorgung des elektrischen Geräts erfolgt und andererseits ein Signal übertragen wird, wobei im normalen Betrieb die über die Zweileiterschnittstelle erfolgende maximale Stromaufnahme des elektrischen Geräts auf einen vorbestimmten oberen Grenzwert beschränkt wird und wobei die Zweileiterschnittstehe ein digitaler Busanschluss ist, **dadurch gekennzeichnet, dass** beim Versetzen des elektrischen Geräts in eine Sonderbetriebsfunktion die zulässige Stromaufnahme des elektrischen Geräts automatisch temporär über den vorbestimmten oberen Grenzwert hinaus erhöht wird, nämlich auf einen solchen Wert erhöht wird, der dem FDE-Wert des Messgeräts entspricht.

7. Verfahren nach Anspruch 6, **dadurch gekennzeichnet, dass** über den digitalen Busanschluss auch während der Sonderbetriebsfunktion des elektrischen Geräts das Signal übertragen wird.

8. Verfahren nach einem der Ansprüche 5 bis 7, **dadurch gekennzeichnet, dass** als Sonderbetriebsfunktion ein Software-Update oder/und eine Kalibrierfunktion oder/und eine Diagnosefunktion oder/und eine Wartungsfunktion angesehen wird.

## Claims

1. An electric device with a two-wire interface, said two-wire interface serving to deliver electric power to the electric device and to transmit a signal, with the maximum power consumption of the electric device during normal operation being restricted to a predefined upper limit and wherein the two-wire interface is an analog power input connection with a normal current range from 4 to 20 mA, **characterised in that** the permissible power consumption of the electric device is automatically and temporarily increased beyond said predefined upper limit when the electric device is switched into a special operational function mode, namely the maximum permissible power consumption is increased to 22 mA.

2. An electric device with a two-wire interface, said two-wire interface serving to deliver electric power to the electric device and to transmit a signal, with the maximum power consumption of the electric device during normal operation being restricted to a predefined upper limit and wherein the two-wire interface is a digital bus connector, **characterized in that** the permissible power consumption of the electric device is automatically and temporarily increased beyond said predefined upper limit when the electric device is switched into a special operational function mode, namely the predefined upper limit is raised to a value that corresponds to the FDE value of the measuring device.

3. The electric device according to claim 2, **characterized in that** the digital bus connector serves to transmit the signal even while in the special operational function mode of the electric device.

4. The electric device according to any one of claims 1 to 3, **characterized in that** a software update and/or a calibration process and/or a diagnostic function and/or a maintenance function is/are considered to constitute a special operational function.

5. A method for operating an electric device that incorporates a two-wire interface which two-wire interface serves to feed electric power to the electric device while also transmitting a signal, with the maximum power drawn by the electric device via the two-wire interface during normal operation being restricted to a predefined upper limit, and the two-wire interface being an analog power input connection with a normal current range of 4 to 20 mA, **characterized in that** as the electric device is switched into a special operational function mode, the permissible maximum power consumption of the electric device is automatically and temporarily increased to 22 mA.

6. A method for operating an electric device that incorporates a two-wire interface which two-wire interface serves to feed electric power to the electric device while also transmitting a signal, with the maximum power drawn by the electric device via the two-wire interface during normal operation being restricted to a predefined upper limit, and the two-wire interface being a digital bus connection, **characterized in that** as the electric device is switched into a special operational function mode, the permissible maximum power consumption of the electric device is automatically and temporarily increased beyond said predefined upper limit, namely raised to a value that corresponds to the FDE value of the measuring device

7. Method according to claim 6, **characterized in that** the digital bus connector serves to transmit the signal even while in the special operational function mode of the electric device.

8. Method according to any one of claims 5 to 7, **characterized in that** a software update and/or a calibration process and/or a diagnostic function and/or a maintenance function is/are considered to constitute a special operational function.

## Revendications

1. Appareil électrique comprenant une interface à deux conducteurs, l'interface à deux conducteurs servant d'une part à l'alimentation en courant électrique de l'appareil électrique et d'autre part à la transmission d'un signal, la consommation électrique maximale de l'appareil électrique ayant lieu par le biais de l'interface à deux conducteurs étant limitée, en fonctionnement normal, à une valeur limite supérieure prédéfinie et l'interface à deux conducteurs étant une connexion électrique analogique ayant une plage de courant normale de 4 à 20 mA, **caractérisé en ce que** la consommation électrique admissible de l'appareil électrique est automatiquement accrue temporairement au-dessus de la valeur limite supérieure prédéfinie lorsque l'appareil électrique est amené dans une fonction d'utilisation particulière, la consommation électrique maximale admissible est augmentée pour être précis à 22 mA.

2. Appareil électrique comprenant une interface à deux conducteurs, l'interface à deux conducteurs servant d'une part à l'alimentation en courant électrique de l'appareil électrique et d'autre part à la transmission d'un signal, la consommation électrique maximale de l'appareil électrique ayant lieu par le biais de l'interface à deux conducteurs étant limitée, en fonctionnement normal, à une valeur limite supérieure prédéfinie et l'interface à deux conducteurs étant une connexion de bus numérique, **caractérisé en ce que** la consommation électrique admissible de l'appareil électrique est automatiquement accrue temporairement au-dessus de la valeur limite supérieure prédéfinie lorsque l'appareil électrique est amené dans une fonction d'utilisation particulière, pour être précis la consommation électrique maximale admissible est augmentée à une valeur qui correspond à l'indice FDE de l'appareil électrique.

3. Appareil électrique selon la revendication 2, **caractérisé en ce que** la connexion de bus numérique sert également à la transmission du signal pendant la fonction d'utilisation particulière de l'appareil électrique.

4. Appareil électrique selon l'une quelconque des revendications 1 à 3, **caractérisé en ce qu'**une mise à jour logicielle et/ou une fonction de calibrage et/ou une fonction de diagnostic et/ou une fonction de maintenance sont considérées comme une fonction d'utilisation particulière.

5. Procédé pour faire fonctionner un appareil électrique qui présente une interface à deux conducteurs, l'interface à deux conducteurs servant d'une part à l'alimentation en courant électrique de l'appareil électrique et d'autre part à la transmission d'un signal, la consommation électrique maximale de l'appareil électrique ayant lieu par le biais de l'interface à deux conducteurs étant limitée, en fonctionnement normal, à une valeur limite, supérieure prédéfinie et l'interface à deux conducteurs étant une connexion électrique analogique ayant une plage de courant normale de 4 à 20 mA, **caractérisé en ce que** la consommation électrique maximale admissible de l'appareil électrique est automatiquement augmentée temporairement à 22 mA lorsque l'appareil électrique est amené dans une fonction d'utilisation particulière.

6. Procédé pour faire fonctionner un appareil électrique qui présente une interface à deux conducteurs, l'interface à deux conducteurs servant d'une part à l'alimentation en courant électrique de l'appareil électrique et d'autre part à la transmission d'un signal, la consommation électrique maximale de l'appareil électrique ayant lieu par le biais de l'interface à deux conducteurs étant limitée, en fonctionnement normal, à une valeur limite supérieure prédéfinie et l'interface à deux conducteurs étant une connexion de bus numérique, **caractérisé en ce que** la consommation électrique admissible de l'appareil électrique est automatiquement accrue temporairement au-dessus de la valeur limite supérieure prédéfinie lorsque l'appareil électrique est amené dans une fonction d'utilisation particulière, pour être précis est augmentée à une valeur qui correspond à l'indice FDE de l'appareil électrique.

7. Procédé selon la revendication 6, **caractérisé en ce que** le signal est transmis par le biais de la connexion de bus numérique également pendant la fonction d'utilisation particulière de l'appareil électrique.

8. Procédé selon l'une quelconque des revendications 5 à 7, **caractérisé en ce qu'**une mise à jour logicielle et/ou une fonction de calibrage et/ou une fonction de diagnostic et/ou une fonction de maintenance sont considérées comme une fonction d'utilisation particulière.
